# EUROPÄISCHE PATENTSCHRIFT

(11) **EP 1 697 660 B1**
(45) Veröffentlichungstag und Bekanntmachung des Hinweises auf die Patenterteilung: **08.10.2008**
(21) Anmeldenummer: 04804857.3
(22) Anmeldetag: 15.12.2004
(51) Int. Cl.: F16H 57/04

(54) **GETRIEBEANORDNUNG FÜR EIN FAHRZEUG**
GEARBOX ARRANGEMENT FOR A VEHICLE
BOITE DE VITESSE POUR VEHICULE

(30) Priorität: 17.12.2003 DE 10359109
(43) Veröffentlichungstag der Anmeldung: 06.09.2006
(73) Patentinhaber: Deere & Company, Moline, IL 61265-8098 (US)
(72) Erfinder: REIS, Viktor, 68123 Mannheim (DE); HAUCK, Walter, 67141 Neuhofen (DE); RIMKUS, Manfred, 68199 Mannheim (DE); SCHÄFER, Helmut, 68775 Ketsch (DE)
(74) Vertreter: Magin, Ludwig Bernhard
(86) Internationale Anmeldenummer: PCT/EP2004/053506
(87) Internationale Veröffentlichungsnummer: WO 2005/059409

(56) Entgegenhaltungen:
- EP-A- 1 602 861
- DE-A1- 1 801 917
- DE-A1- 10 134 054
- US-B1- 6 223 858
- US-B1- 6 299 561

## Beschreibung

Die vorliegende Erfindung betrifft eine Getriebeanordnung für ein Fahrzeug. Vorzugsweise ist das Fahrzeug ein industrielles oder ein landwirtschaftliches Nutzfahrzeug. Die Getriebeanordnung ist zumindest teilweise mit Schmiermittel eines Schmiermittelsumpfs schmierbar. Die Getriebeanordnung weist mindestens zwei Getriebeabschnitte auf. Jeder Getriebeabschnitt weist ein Getriebegehäuseteil auf, wobei die Getriebegehäuseteile der zwei Getriebeabschnitte aneinandergrenzen und einen Teil des Schmiermittelsumpfs bilden. Insbesondere ist im normalen Betriebsmodus üblicherweise entweder der eine oder der andere Getriebeabschnitt betreibbar.

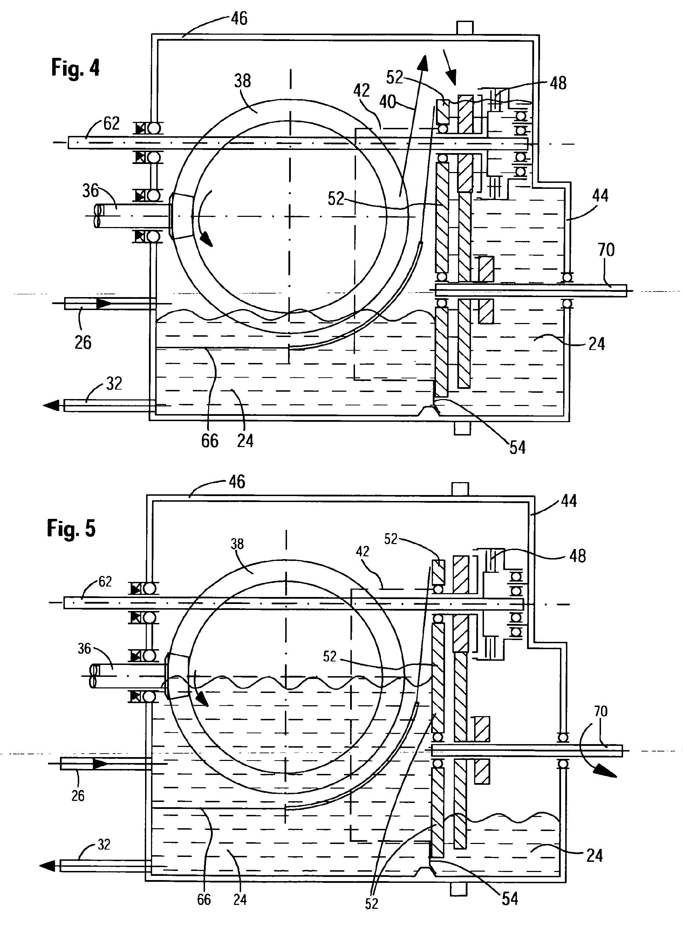

Aus der US 6,299,561 B1 ist eine Getriebeanordnung für ein Fahrzeug bekannt. Die Getriebeanordnung ist zumindest teilweise mit Schmiermittel eines Schmiermittelsumpfs schmierbar. Die Getriebeanordnung gemäß Fig. 5 weist zwei Zahnradpaare auf, welche jeweils als Getriebeabschnitt aufgefasst werden könnten. Jedes Zahnradpaar weist ein Getriebegehäuseteil auf. Die Getriebegehäuseteile der zwei Zahnradpaare grenzen aneinander und bilden einen Teil des Schmiermittelsumpfs.

Die vorangemeldete und nachveröffentlichte EP 1 602 861 A1 stellt ein Dokument gemäß Artikel 54(3) EPÜ dar.

Getriebeanordnungen der eingangs genannten Art sind seit langem aus dem Stand der Technik bekannt. So weisen beispielsweise die für Traktoren eingesetzte Getriebe der Anmelderin mehrere Getriebeabschnitte auf, welche unmittelbar aneinandergrenzen und welche einen Schmiermittelsumpf bilden. Unter einem Getriebeabschnitt im Sinn der vorliegenden Erfindung ist insbesondere ein Funktionsabschnitt eines Getriebes zu verstehen, beispielsweise der Differentialgetriebeabschnitt oder der Zapfwellengetriebeabschnitt. Unter einem Getriebegehäuseteil im Sinn der vorliegenden Erfindung ist insbesondere der Teil des gesamten Getriebegehäuses zu verstehen, der einen Getriebeabschnitt in sich aufnimmt. Ein Getriebegehäuseteil muss nicht notwendigerweise von einem anderen Getriebegehäuseteil abmontierbar bzw. zwei- oder mehrteilig ausgebildet sein, die Getriebegehäuseteile können auch aus einem zusammenhängenden Gehäuseteil bestehen. Als Schmiermittel wird hierbei üblicherweise Getriebeöl eingesetzt. In einem von den Getriebeabschnitten räumlich abgetrennten weiteren Getriebeabschnitt - welcher beispielsweise ein Lastschaltgetriebe aufweist - ist eine Luftpumpe vorgesehen. Im Fahrbetrieb des Fahrzeugs bewirkt die dann betriebene Luftpumpe, dass das in dem weiteren Getriebeabschnitt befindliche Schmiermittel in die Getriebeabschnitte - im Konkreten in ein Differenzialgetriebe und ein Zapfwellengetriebe - durch einen entsprechend vorgesehenen Schmiermittelkanal befördert wird.

Hierdurch kommt es zu einem erhöhten Schmiermittelstand im Zapfwellengetriebebereich und im Differenzialgetriebebereich des Antriebsstrangs, also in den anderen Getriebeabschnitten, was insbesondere bei einer hohen Fahrgeschwindigkeit zu einem erhöhten Plantschverlust im Differenzialgetriebebereich der Getriebeanordnung führt. Hierdurch wird in nachteiliger Weise der Wirkungsgrad der Getriebeanordnung vor allem bei hohen Fahrgeschwindigkeiten verringert.

Nun könnte ein zusätzliches Gehäuseteil vorgesehen sein, in welchen das Schmiermittel - beispielsweise bei hohen Fahrgeschwindigkeiten des Fahrzeugs - verbracht werden könnte, wie das beispielsweise bei der DE 1 801 917 vorgesehen ist. Das Verbringen des Schmiermittels in den zusätzlichen Gehäuseteil wird bei der DE 1 801 917 dadurch erreicht, dass ein in den Schmiermittelsumpf eintauchendes Tellerrad vorgesehen ist, mit welchem das Schmiermittel in tangentialer Richtung nach oben geschleudert wird und nach Reflexion an der oberen Getriebegehäusewand in diesen zusätzlichen Gehäuseteil gelangt. Dieser zusätzliche Gehäuseteil nimmt jedoch zusätzlichen Bauraum in Anspruch, der nicht ohne weiteres zur Verfügung steht.

Der vorliegenden Erfindung liegt daher die Aufgabe zugrunde, eine Getriebeanordnung der eingangs genannten Art anzugeben und weiterzubilden, durch welches die vorgenannten Probleme überwunden werden. Insbesondere sollen zumindest in den meisten Betriebszuständen des Fahrzeugs Plantschverluste der Getriebeanordnung reduziert werden, wobei der für die Getriebeanordnung vorgesehene Bauraum nicht wesentlich erhöht werden soll.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Getriebeanordnung der eingangs genannten Art dadurch gekennzeichnet, dass zwischen den zwei Getriebeabschnitten ein Trennmittel vorgesehen ist, mit welchem die zwei Getriebeabschnitte zumindest teilweise voneinander abtrennbar sind. Hierdurch ist Schmiermittel in dem Getriebegehäuseteil zurückhaltbar, dessen Getriebeabschnitt in dem momentanen Betriebszustand nicht oder mit geringerer Drehzahl betrieben wird.

Erfindungsgemäß ist zunächst erkannt worden, dass ein zusätzliches Gehäuseteil als Speicherreservoir für das Schmiermittel nicht erforderlich ist, da durch das Trennmittel der Getriebeabschnitt als Speicherreservoir für das Schmiermittel genutzt werden kann, welcher in dem momentan vorliegenden Betriebszustand des Fahrzeugs nicht oder nur geringfügig betrieben wird. Hierdurch kann der Schmiermittelstand in dem Getriebeabschnitt, welcher in dem momentanen Betriebszustand des Fahrzeugs mit einer hohen Drehzahl betrieben wird, verringert bzw. herabgesetzt werden, wodurch in ganz besonders vorteilhafter Weise die Plantschverluste zumindest bezüglich dieses Getriebeabschnitts ganz erheblich verringert werden können. Da kein zusätzliches Gehäuseteil als Speicherreservoir vorzusehen ist, muss der Bauraum bei der erfindungsgemäßen Getriebeanordnung nicht vergrößert werden. Hierbei kann das Schmiermittel aus dem Getriebeabschnitt, der mit hoher Drehzahl betrieben wird, beispielsweise durch ein in den Schmiermittelsumpf eintauchendes Tellerrad in Richtung und/oder über das Trennmittel hinweg zu dem anderen Getriebeabschnitt geschleudert werden. Dementsprechend ist in diesem Beispiel des indirekten Verbringens des Schmiermittels keine zusätzliche Pumpe oder ähnliche Mittel vorzusehen, um das Schmiermittel direkt und/oder aktiv von dem einen Getriebeabschnitt in den anderen Getriebeabschnitt zu verbringen. Durch das Trennmittel wird eine Auftrennung der Oberflächen der zwei Getriebeabschnitte bewirkt. Hierdurch kann vor allen Dingen in vorteilhafter Weise die Menge des zu verlagernden Schmiermittels bezogen auf eine gewünschte Schmiermittelstandsabsenkung in einer der beiden Getriebeabschnitte deutlich reduziert werden.

In einer bevorzugten Ausführungsform weist das Trennmittel eine Trennwand auf. Diese Trennwand ist zwischen den zwei Getriebeabschnitten vorgesehen und erstreckt sich vorzugsweise vom Boden des Getriebegehäuseteils nach oben, jedoch nicht bis zur oberen inneren Getriebegehäusewand eines Getriebegehäuseteils. Insoweit sind die zwei Getriebeabschnitte über den verbleibenden Spalt bzw. über die verbleibende Öffnung luftverbunden. Durch den verbleibenden Spalt bzw. die verbleibende Öffnung kann auch das Schmiermittel mit Hilfe eines in den Schmiermittelsumpf eintauchenden, im Betrieb rotierenden Tellerrads jeweils in den anderen Getriebeabschnitt geschleudert werden.

Ganz besonders bevorzugt erstreckt sich die Trennwand vom Boden der Getriebeanordnung bis mindestens auf eine Höhe einer in einem der Getriebegehäuseteile angeordneten Getriebeeingangswelle oder Getriebeausgangswelle. Im Konkreten könnte der eine Getriebeabschnitt als Differenzialgetriebe und der andere Getriebeabschnitt als Zapfwellengetriebe ausgebildet sein. In diesem Fall ist vorgesehen, dass die Trennwand sich vom Boden der Getriebeanordnung ungefähr bis auf die Höhe der Antriebswelle der Zapfwelle erstreckt. Gegebenenfalls könnte die Trennwand auch noch höher ausgebildet sein, und zwar insbesondere dann, wenn die für das Schmiermittel nutzbaren Volumina der zwei Getriebeabschnitte sich wesentlich unterscheiden. In diesem Fall sollte es nämlich möglich sein, dass aufgrund der höher ausgeführten Trennwand der Getriebeabschnitt mit dem kleineren räumlichen Volumenanteil eine größere Menge von Schmiermittel, welches in dem Getriebeabschnitt mit dem größeren Volumenanteil üblicherweise aufnehmbar ist, in diesem Getriebeabschnitt zurückhalten kann. Falls die Trennwand mit ihrem oberen Ende sich über die Antriebswelle der Zapfwelle erstreckt, könnte in der Trennwand eine Aussparung bzw. eine Bohrung für die Antriebswelle der Zapfwelle vorgesehen sein.

Gegebenenfalls könnte die Trennwand ein Dichtmittel aufweisen, mit welchem die Trennwand gegen die Getriebeeingangswelle oder Getriebeausgangswelle abdichtbar ist, und zwar dann, wenn der obere Rand der Trennwand oberhalb der Getriebeeingangswelle oder Getriebeausgangswelle liegt. Hierdurch kann ein eventuell unerwünschter Rückfluss des Schmiermittels durch den Zwischenraum zwischen der entsprechenden Getriebewelle und der Trennwand verringert bzw. vermieden werden.

In einer ganz besonders bevorzugten Ausführungsform ist das Trennmittel gegenüber einem Getriebegehäuseteil mit Hilfe von weiteren Dichtmitteln abdichtbar. So könnte beispielsweise das Trennmittel durch ein in der Getriebeanordnung bereits vorhandenes Lagerschild gegebenenfalls in Verbindung mit einem oder mehreren zusätzlichen Wandblechteil(en) gebildet werden, welches die vorderen Lagerstellen eines Zapfwellengetriebes stützt. Eine Abdichtung des Lagerschilds bzw. des Wandblechteils gegenüber den Boden- und den Seitenwänden der Getriebeanordnung könnte beispielsweise mit Hilfe von elastischen Federstahlstreifen erfolgen, wobei der beziehungsweise die Federstahlstreifen einerseits an dem Lagerschild bzw. an den Wandblechteilen befestigt ist bzw. sind und andererseits an einen an der Gehäusewand der Getriebeanordnung vorgesehenen abgeschrägten Bereich zur Anlage kommen. Anstelle der Federstahlstreifen könnten auch Dichtelemente aus Gummi oder Kunststoff eingesetzt werden. Hierdurch wird zwar keine hermetische Abschottung zwischen den zwei Getriebeabschnitten erzielt, dies ist allerdings auch nicht zwingend erforderlich, da der Anteil des Schmiermittels, welcher durch eventuelle Undichtigkeiten des weiteren Dichtmittels von dem einen Getriebeabschnitt zu dem anderen Getriebeabschnitt gelangt, vernachlässigbar zu dem Anteil des Schmiermittels ist, welcher beispielsweise von einem rotierenden Tellerrad von dem einen Getriebeabschnitt zu dem anderen Getriebeabschnitt befördert wird. In ganz besonders vorteilhafter Weise können durch das Vorsehen von Federstreifen die Anforderungen an die Fertigungstoleranzen der Guss- bzw. Blechteile gering gehalten werden, was eine kostengünstige Herstellung der erfindungsgemäßen Getriebeanordnung ermöglicht.

Ganz besonders bevorzugt ist das Trennmittel derart ausgebildet, dass mehr als die Hälfte des in den zwei Getriebeabschnitten üblicherweise befindlichen Schmiermittels in einem der Getriebegehäuseteile zurückhaltbar ist. insbesondere könnte vorgesehen sein, dass das Trennmittel nicht lediglich durch eine ebene Trennwand ausgeführt ist, sondern durch eine entsprechende Ausbildung in den Teil eines Getriebeabschnitts sich erstreckt, welcher nicht von Getriebebauteilen verbaut ist. Insoweit kann das Trennmittel dass Innenvolumen der zwei aneinandergrenzenden Getriebeabschnitte in einer anderen geometrischen Form voneinander trennen, als dies beispielsweise durch die Gehäuse der jeweiligen Getriebeabschnitte definiert sein könnte. Vorzugsweise ist des Trennmittel derart ausgebildet, dass damit circa die Hälfte bis 2/3 des Volumens des in den zwei Getriebeabschnitten üblicherweise befindlichen Schmiermittels in einem der zwei Getriebeabschnitte zurückgehalten werden kann.

Grundsätzlich könnte ein Teil des Schmiermittels aus dem mit hoher Drehzahl betriebenen Getriebeabschnitt mit Hilfe von Schmiermittelpumpen, Luftpumpen oder ähnlichen Baugruppen - sozusagen aktiv - in den anderen Getriebeabschnitt verbracht werden. Hiermit wäre beispielsweise eine Schmiermittelpegelregelung realisierbar. Bevorzugt sind jedoch diese Baugruppen in der Getriebeanordnung vorzusehen, wodurch zusätzliche Kosten in der Herstellung verursacht werden. Daher ist besonders bevorzugt vorgesehen, mindestens ein Führungsmittel in einem Getriebegehäuseteil vorzusehen, mit welchem das von einem in einem Getriebegehäuseteil angeordneten rotierenden Getriebeteil - beispielsweise einem Tellerrad geschleuderte Schmiermittel in den anderen Getriebegehäuseteil leitbar ist. Gemäß dieser vorteilhaften Ausführungsform wird das Schmiermittel von dem einen Getriebeabschnitt in den anderen durch die Schleuderwirkung eines rotierenden Getriebeteils erzielt. Das Vorsehen von Führungsmitteln kann die Förderwirkung verbessern oder optimieren. Als Führungsmittel könnte ein Leitblech vorgesehen sein, welches in Bodennähe der Getriebeanordnung beispielsweise am Getriebegehäuse befestigt ist und welches zumindest teilweise konzentrisch zu dem rotierenden Getriebeteil angeordnet ist. Ein weiteres Führungsmittel könnte durch ein bogenförmig ausgebildetes Leitblech gebildet sein, welches an der oberen Gehäusewand der Getriebeanordnung angeordnet ist und welches einen von einem Getriebeabschnitt von schräg unten kommenden Schmiermittelflüssigkeitsstrahl in einem vorgebbaren Winkel in den anderen Getriebeabschnitt reflektiert bzw. leitet.

In einer ganz besonders bevorzugten Ausführungsform ist ein Rückführmittel vorgesehen, mit welchem Schmiermittel von einem Getriebegehäuseteil in den anderen Getriebegehäuseteil rückführbar ist. Im einfachsten Fall ist das Rückführmittel an dem Trennmittel - insbesondere im bodennahen Bereich - angeordnet und vorzugsweise in Form einer Durchgangsöffnung ausgebildet. Der Durchmesser der Durchgangsöffnung ist derart bemessen, dass der Rückfluss des Schmiermittels aus dem Getriebeabschnitt mit dem höheren Schmiermittelpegel nicht zu langsam erfolgt, so dass stets eine ausreichende Menge von Schmiermittel in dem mit hoher Drehzahl betriebenen Getriebeabschnitt vorhanden ist, so dass diese Getriebekomponenten ausreichend geschmiert sind und gleichzeitig ein sicheres Ansaugen von Schmiermittel aus dem Schmiermittelsumpf durch die Schmiermittelpumpe unter allen Betriebsbedingungen gewährleistet ist. Andererseits soll der Rückfluss des Schmiermittels aus dem Getriebeabschnitt mit dem höheren Schmiermittelpegel nicht zu schnell erfolgen, so dass die Plantschverluste in dem mit hoher Drehzahl betriebenen Getriebeabschnitt nicht zu groß werden. Als Rückführmittel wäre allerdings auch ein in der Getriebeanordnung vorgesehener Schmiermittelkanal denkbar, in welchem das Schmiermittel - unter Umständen auch mit einer Schmiermittelpumpe - in den anderen Getriebeabschnitt gefördert werden könnte.

Hierdurch ist eine dynamische Schmiermittel- bzw. Ölstandsregelung möglich, die bei geeigneter Ausbildung und Dimensionierung des Trennmittels sowie des Rückführmittels quasi selbstgesteuert arbeitet.

Wie bereits angedeutet, könnte im Konkreten der eine Getriebeabschnitt ein Differentialgetriebe und der andere Getriebeabschnitt ein Zapfwellengetriebe aufweisen, wie das beispielsweise bei Getriebeanordnungen für landwirtschaftliche Nutzfahrzeuge der Anmelderin der Fall sein kann. Bei hohen Fahrgeschwindigkeiten wird das Differentialgetriebe mit einer hohen Drehzahl betrieben, so dass das Schmiermittel aus dem Differentialgetriebe in das Zapfwellengetriebe geschleudert wird. Falls die Fahrgeschwindigkeit verringert wird und die Zapfwelle zugeschaltet wird, wird das Differentialgetriebe mit einer geringeren Drehzahl, das Zapfwellengetriebe jedoch mit einer höheren Drehzahl betrieben. In diesem Fall wird das in dem Zapfwellengetriebe befindliche Schmiermittel in das Differentialgetriebe geschleudert. In beiden Fällen sorgt das Rückführmittel dafür, dass eine vorgebbare - unter Umständen geringe Menge - aus dem einen Getriebeabschnitt zurück in den anderen Getriebeabschnitt fließen kann. Hierdurch ist eine dynamische Schmiermittelstandsregelung realisiert, welche insbesondere dann von Vorteil ist, wenn das landwirtschaftliche Nutzfahrzeug eine hohe Fahrgeschwindigkeit aufweist, beispielsweise 50 km/h. In diesem Fall wird das Schmiermittel aus Differentialgetriebe in das Zapfwellengetriebe geschleudert, so dass hier nahezu keine Plantschverluste auftreten und im Antriebsgetriebestrang circa 4 kW Leistungsverluste vermieden werden können. Falls das landwirtschaftliche Nutzfahrzeug in Zapfwellenbetrieb arbeitet, beträgt die Fahrgeschwindigkeit üblicherweise nur wenige km/h, so dass nahezu keine Plantschverluste bei dem mit niedriger Drehzahl betriebenen Differentialgetriebe auftreten. Das mit hoher Drehzahl betriebene Zapfwellengetriebe schleudert hingegen das Schmiermittel in das Differentialgetriebe, so dass kaum Plantschverluste im Zapfwellengetriebe auftreten. Für den Fall eines Zapfwellenbetriebs bei hoher Fahrgeschwindigkeit des Nutzfahrzeugs können Plantschverluste auftreten, die bei herkömmlichen Getriebeanordnungen dieser Art ohne zusätzliche konstruktive Maßnahmen allerdings auch nicht vermieden werden können. Es ist messtechnisch nachgewiesen, dass der Zapfwellenbetrieb bei 50 km/h Fahrgeschwindigkeit auch noch mit der erfindungsgemäßen Getriebeanordnung eine auf Plantschverluste zurückzuführende Verlustleistung aufweist, demgegenüber die Verlustleistung im Differentialgetriebe aber deutlich sinkt, so dass durch die erfindungsgemäße Getriebeanordnung in ganz besonders vorteilhafter Weise in der Gesamtbilanz eine Verlustleistungsreduzierung zu verzeichnen ist.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung
- Fig. 1: in einer Seitenansicht ein erstes Ausführungsbeispiel einer erfindungsgemäßen Getriebeanordnung in einem ersten Betriebszustand des Fahrzeugs,
- Fig. 2: in einer Seitenansicht das Ausführungsbeispiel aus Figur 1 in einem zweiten Betriebszustand des Fahrzeugs,
- Fig. 3: in einer vergrößerten Seitenansicht zwei Getriebeabschnitte des erfindungsgemäßen Ausführungsbeispiels aus den Figuren 1 und 2 in dem zweiten Betriebszustand des Fahrzeugs,
- Fig. 4: in einer Seitenansicht die zwei Getriebeabschnitte aus Figur 3 in einem dritten Betriebszustand des Fahrzeugs,
- Fig. 5: in einer Seitenansicht die zwei Getriebeabschnitte aus Figur 3 in einem vierten Betriebszustand des Fahrzeugs,
- Fig. 6: in einer Draufsicht die zwei Getriebeabschnitte aus Figur 3,
- Fig. 7: in einer perspektivischen Ansicht einzelne Komponenten der zwei Getriebeabschnitte aus Figur 3 und
- Fig. 8: eine Schnittansicht eines Teils des Trennmittels, welches mit einem Dichtungsmittel gegen die Innenseite des Getriebegehäuses abgedichtet ist.

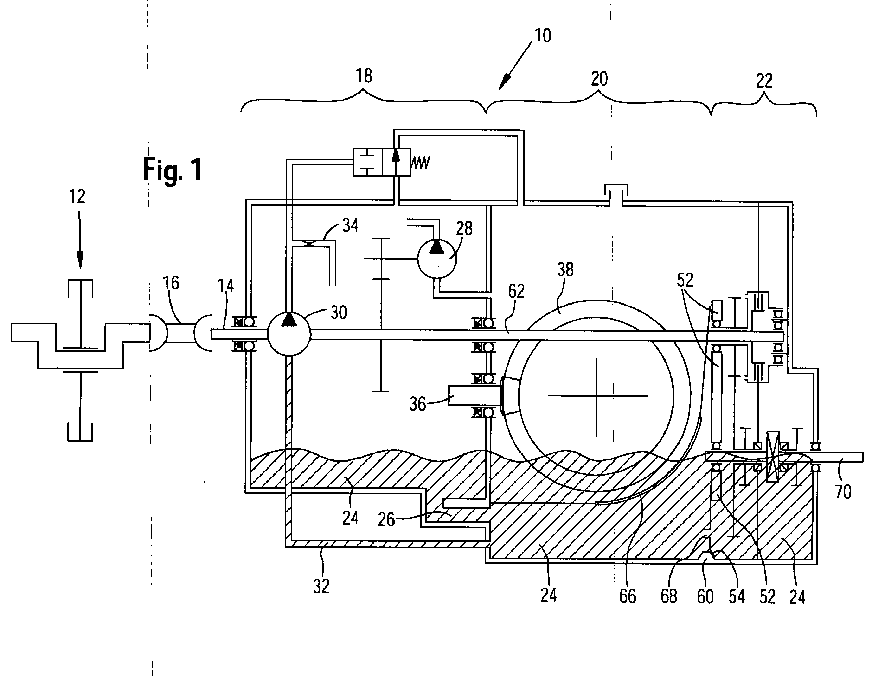

Gleiche oder ähnliche Bauteile sind mit denselben Bezugszeichen gekennzeichnet. Figur 1 zeigt eine Getriebeanordnung 10 eines in den Figuren 1 bis 8 nicht weiter gezeigten Fahrzeugs. Die in Figur 1 gezeigte Getriebeanordnung 10 befindet sich in einem Betriebszustand, in welchem der Verbrennungsmotor 12 des Fahrzeugs abgeschaltet ist. Die Getriebeanordnung 10 umfasst eine Getriebeeingangswelle 14, welche mit dem Verbrennungsmotor 12 über eine Gelenkwelle 16 gekoppelt ist. Die Getriebeanordnung 10 umfasst einen Hauptgetriebeteil 18, in welchem das nicht näher gezeigte Schaltgetriebe des Fahrzeugs angeordnet ist. An das Gehäuse des Hauptgetriebeteils 18 ist ein erster Getriebeabschnitt 20 angeordnet, in welchem das Differentialgetriebe des Fahrzeugs angeordnet ist. Ein zweiter Getriebeabschnitt 22 nimmt das Zapfwellengetriebe des Fahrzeugs auf.

Sowohl in dem Hauptgetriebeteil 18 als auch in den zwei Getriebeabschnitten 20, 22 befindet sich Schmiermittel 24. Im abgeschalteten Zustand des Verbrennungsmotors 12 ist der Schmiermittelpegel in der Getriebeanordnung 10 ausgeglichen, siehe hierzu Figur 1. Das wird über den im Bodenbereich der Getriebeanordnung 10 angeordneten Verbindungskanal 26 erreicht, welcher den gegenüber den zwei Getriebeabschnitten 20, 22 luftdicht abgetrennten Hauptgetriebeteil 18 mit den zwei Getriebeabschnitten 20, 22 verbindet.

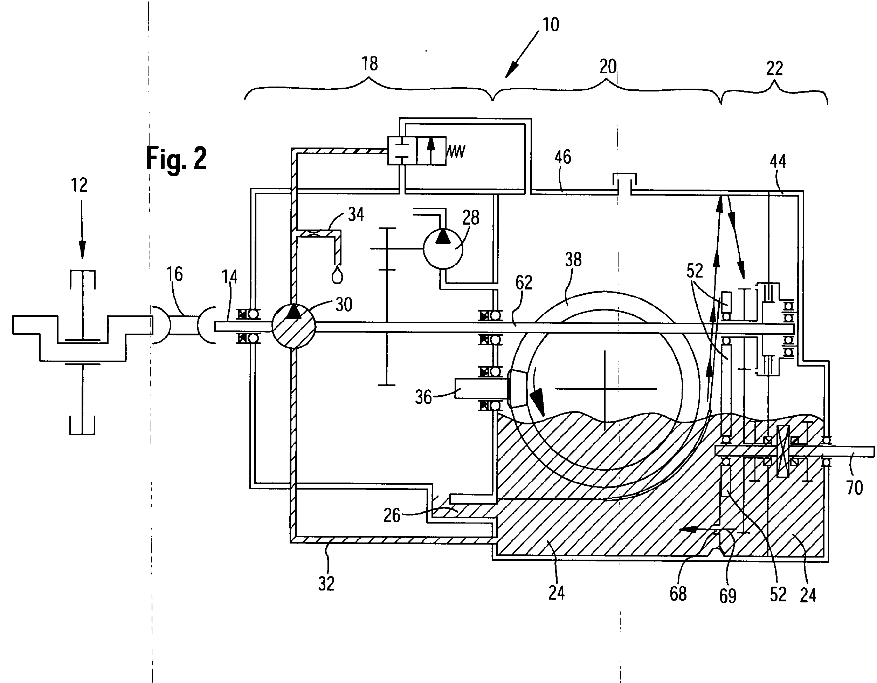

Figur 2 zeigt die Getriebeanordnung 10 in einem Zustand, in welchem der Verbrennungsmotor 12 eingeschaltet ist.

Dementsprechend wird über die Gelenkwelle 16 die Getriebeeingangswelle 14 angetrieben. Hierdurch wird die Luftpumpe 28 angetrieben, welche Luft aus den zwei Getriebeabschnitten 20, 22 in den Hauptgetriebeteil 18 fördert. Hierdurch wird im Hauptgetriebeteil 18 ein Überdruck erzeugt, welcher das Schmiermittel 24 durch den Verbindungskanal 26 in die zwei Getriebeabschnitte 20, 22 verdrängt. Dementsprechend ist der Schmiermittelpegel im Hauptgetriebeteil 18 nahezu vollständig abgefallen, in den zwei Getriebeabschnitten 20, 22 ist der Schmiermittelpegel hingegen entsprechend den Volumenverhältnissen deutlich angestiegen. Die Schmiermittelpumpe 30 saugt Schmiermittel 24 über den Ansaugkanal 32 an und fördert kontinuierlich Schmiermittel 24 über den Schmiermittelzufuhrkanal 34 auf die im Hauptgetriebeabschnitt 18 nicht weiter gezeigten Getriebeteile. Insoweit treten im Hauptgetriebeteil 18 so gut wie keine Plantschverluste auf.

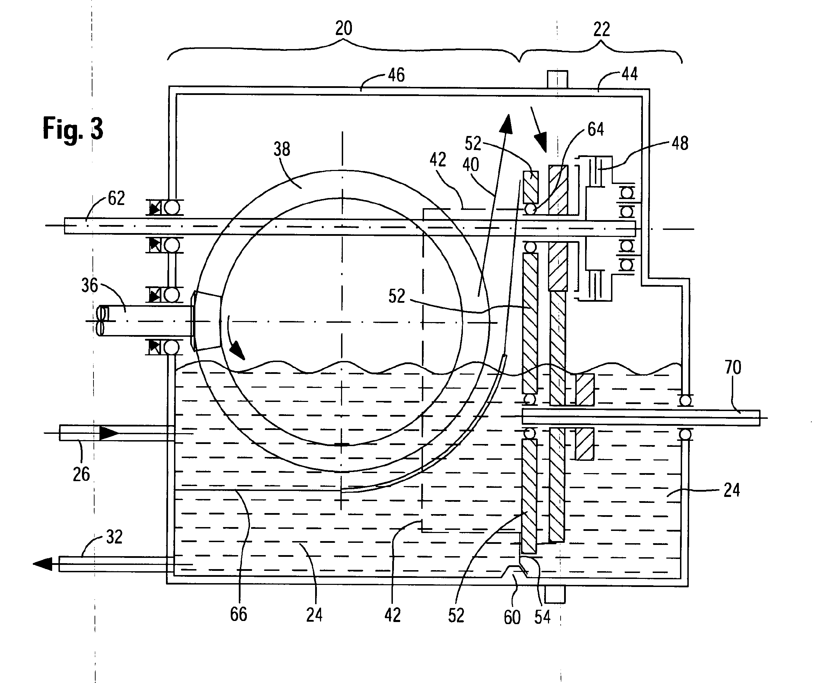

Figur 3 zeigt in einer vergrößerten Seitenansicht die zwei Getriebeabschnitte 20, 22, wobei der Schmiermittelpegel in den zwei Getriebeabschnitten 20, 22 im Wesentlichen dem aus Figur 2 entspricht. Die Eingangswelle 36 dreht das in dem Getriebeabschnitt 20 angeordnete Differenzialtellerrad 38 in dem in Figur 3 gezeigten Betriebszustand mit geringerer Drehzahl. Das Differenzialtellerrad 38 ist bei dem in Figur 3 gezeigten Schmiermittelpegel fast bis zur Hälfte im Schmiermittel 24 eingetaucht was für sich gesehen bei hohen Drehzahlen des Differenzialtellerrads 38 zu hohen Plantschverlusten führen würde. Das Differenzialtellerrad 38 schleudert etwas Schmiermittel 24 in tangentialer Richtung schräg nach oben, was mit dem Pfeil 40 angedeutet ist.

Figur 4 zeigt die zwei Getriebeabschnitte 20, 22 in einem Betriebszustand des Fahrzeugs, bei welchem das Differenzialtellerrad 38 mit erhöhter Drehzahl dreht. Das Differenzialtellerrad 38 schleudert nun sehr viel mehr Schmiermittel 24 in tangentialer Richtung schräg nach oben, was mit dem Pfeil 40 angedeutet ist. Das nach oben geschleuderte Schmiermittel 24 wird an der oberen Gehäusewand reflektiert und in den Getriebeabschnitt 22 geleitet. Dementsprechend sind die in dem Getriebeabschnitt 20 auftretenden Plantschverluste bei diesem Betriebszustand des Fahrzeugs nahezu vernachlässigbar. Dies wird dadurch erreicht, dass erfindungsgemäß ein Trennmittel 42 vorgesehen ist, welches zwischen dem Getriebeabschnitt 20 und dem Getriebeabschnitt 22 angeordnet ist. Mit dem Trennmittel 42 können somit die zwei Getriebeabschnitte 20, 22 teilweise voneinander abgetrennt werden, wodurch Schmiermittel 24 in dem Getriebegehäuseteil 44 des Getriebeabschnitts 22 dann zurückgehalten werden kann, wenn das im Getriebegehäuseteile 46 angeordnete Differenzialtellerrad 38 des Getriebeabschnitts 20 mit hoher Drehzahl dreht.

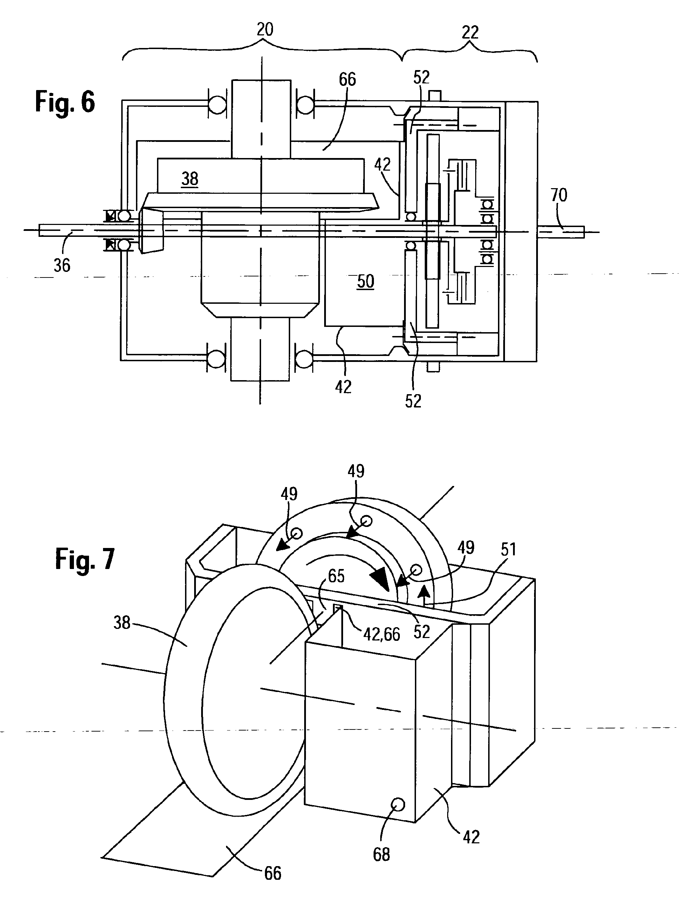

Figur 5 zeigt die zwei Getriebeabschnitte 20, 22 in einem anderen Betriebszustand des Fahrzeugs. In diesem Betriebszustand dreht das Differenzialtellerrad 38 mit einer geringen Drehzahl, mit anderen Worten beträgt die Fahrgeschwindigkeit des Fahrzeugs weniger als ungefähr 15 km/h. Das im Getriebegehäuseteil 44 angeordnete Zapfwellengetriebe hingegen dreht mit hoher Drehzahl, so dass das Schmiermittel 24 vom Getriebeabschnitt 22 in den Getriebeabschnitt 20 geschleudert wird, und zwar grundsätzlich nach dem gleichen Prinzip über das Eintauchen eines drehbar angeordneten Zahnrads, welches das Schmiermittel 24 zunächst schräg nach oben an die obere Gehäusewand der Getriebeanordnung 10 schleudert, wo es in den Getriebeabschnitt 20 reflektiert wird. Insoweit sind die Plantschverluste bei diesem Betriebszustand des Fahrzeugs im Getriebeabschnitt 22 nahezu vernachlässigbar, wobei die Plantschverluste des Differentialgetriebes - wenn überhaupt vorhanden - in einem geringen Verlustbereich sind. Obwohl die in das Schmiermittel 24 eintauchenden Zahnräder für sich gesehen einen Teil des Schmiermittels 24 senkrecht nach oben schleudern würden und demgemäß das Schmiermittel 24 nicht in den Getriebeabschnitt 20 befördern würden, wird das Schmiermittel 24 dennoch schräg in Richtung des Getriebeabschnitts 20 geleitet, da bei eingeschaltetem Zapfwellenbetrieb eine - nicht gezeigte - Schmiermittelkühlung für die Zapfwellenkupplung 48 aktiviert wird, und das die Zapfwellenkupplung 48 durchströmende Schmiermittel 24 eine horizontale Komponente in Richtung des Getriebeabschnitts 20 aufweist, siehe hierzu die Pfeile 49 aus Figur 7. Hierdurch ergibt sich aufgrund der Überlagerung einerseits der - durch Pfeil 51 angedeuteten - vertikalen und andererseits der horizontalen Schmiermittelschleuderrichtung insgesamt eine schräg nach oben verlaufende Schmiermittelkomponente. Die Förderwirkung gemäß Pfeil 51 kommt nicht von dem in Fig. 7 gezeigten, in dieser Ansicht rechts herum drehenden Zahnrad, mit welchem die Kupplungstrommel der Zapfwellenkupplung 48 verbunden ist, da dieses Rad nicht bis hinunter in den Schmiermittelsumpf herunter ragt. Vielmehr kommt die Förderwirkung von einem mit diesem Rad kämmenden - nicht gezeigten - Zahnrad, das koaxial zur Zapfwellenausgangswelle 70 angeordnet ist.

Figur 6 zeigt die zwei Getriebeabschnitte 20, 22 in einer Draufsicht. Hierbei ist erkennbar, dass das Trennmittel 42 sich in einem Bereich in den Getriebeabschnitt 20 erstreckt, welcher mit dem Bezugszeichen 50 gekennzeichnet ist. Hierdurch wird das zum Zurückhalten des Schmiermittels 24 in dem Getriebeabschnitt 22 zur Verfügung stehende Volumen vergrößert. Dies ist auch in Figur 7 erkennbar, wobei hier lediglich schematisch das Differenzialtellerrad 38 des Getriebeabschnitts 20 sowie einzelne Getriebeteile des Zapfwellengetriebes des Getriebeabschnitts 22 perspektivisch dargestellt sind. In den Figuren 6 und 7 ist das Lagerschild 52 des Getriebeabschnitts 22 gezeigt, welches in Form eines Gussteils ausgebildet ist, welches die vorderen Lagerstellen des Zapfwellengetriebes stützt. An diesem Lagerschild 52 ist das Trennmittel 42 aufgesetzt und damit verschraubt.

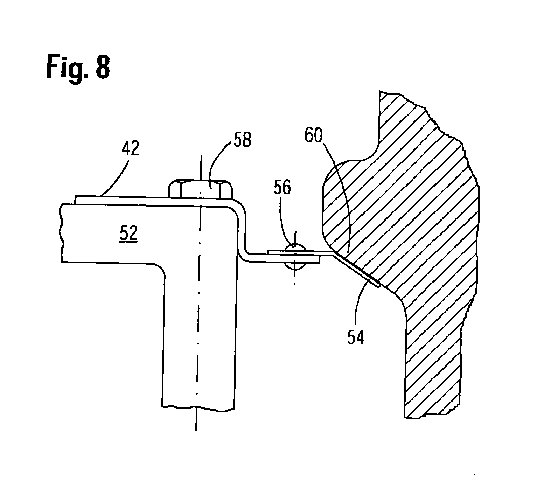

An dem Trennmittel 42 ist ein Federstahlstreifen 54 mit einem Befestigungsmittel 56, beispielsweise mit Nieten, befestigt, was Figur 8 entnehmbar ist. Das Trennmittel 42 wiederum ist am Lagerschild 52 mit der Schraube 58 befestigt. In diesem Zustand wird der Federstahlstreifen 54 an einen an der Getriebegehäusewand vorgesehenen, schrägen Steg 60 angedrückt. Hierdurch können die Getriebeabschnitte 20, 22 für das Schmiermittel 24 dichtend voneinander abgetrennt werden, wobei in vorteilhafter Weise produktionsbedingte, mehr oder weniger starke Verformungen der Guss- oder Blechteile, an welchen die Federstahlstreifen 54 zur Anlage kommen, ausgeglichen werden können.

Den Figuren 3 bis 5 ist entnehmbar, dass das Trennmittel 42 sich vom Boden der Getriebeanordnung 10 bis oberhalb der Antriebswelle 62 für das Zapfwellengetriebe erstreckt. Hierbei könnte sich die Antriebswelle 62 für das Zapfwellengetriebe durch das Trennmittel 42 hindurch erstrecken, wobei ein Dichtmittel vorzusehen wären, die eine dem Lager 64 vergleichbare Wirkung hat, mit welchem die Antriebswelle 62 gegenüber dem Trennmittel 42 dann abzudichten wäre. Figur 7 zeigt jedoch einen Bereich 65, in welchem das Trennmittel 42 sich nur bis unterhalb der Antriebswelle 62 des Zapfwellengetriebes erstreckt. Dementsprechend muss das Trennmittel 42 an dieser Stelle kein Dichtmittel aufweisen.

In den Figuren 3 bis 7 ist das Führungsmittel 66 angedeutet, welches in Form eines Leitblechs ausgeführt ist. Mit dem Führungsmittel 66 wird die Förderwirkung des Differenzialtellerrads 38 gesteigert, so dass bei einem Betrieb des Differentialgetriebes mit hoher Drehzahl die Förderung des Schmiermittels 24 in den Getriebeabschnitt 22 optimiert ist.

Im bodennahen Bereich der Getriebeanordnung 10 ist im Trennmittel 42 ein Rückführmittel 68 vorgesehen, welches im Konkreten in Form einer Bohrung mit einem Durchmesser von ca. 8 mm ausgeführt ist. Dies ist beispielsweise den Figuren 1, 2 und 7 entnehmbar. Hierdurch ist eine dynamische Schmiermittelpegelregelung gewährleistet, die bei hoher Fahrgeschwindigkeit Schmiermittel 24 aus dem Getriebeabschnitt 20 in den Getriebeabschnitt 22 verlagert und dadurch die Pantschverluste des drehenden Differentialtellerrades 38 deutlich reduziert, bei kleinen Fahrgeschwindigkeiten jedoch wird der Schmiermittelmittelpegel nicht wesentlich beeinflusst, weil die geringe Menge an geschleudertem Schmiermittel 24 mühelos aus dem Getriebeabschnitt 22 in den Getriebeabschnitt 20 zurückfließen kann, siehe Pfeil 69 aus Figur 2.

Falls die Zapfwelle 70 in Betrieb ist - dies ist üblicherweise nur bei Fahrgeschwindigkeiten von bis zu 15 km/h der Fall - ergibt sich ein weiterer Vorteil dadurch, dass nunmehr durch die Förderwirkung des rotierenden Räderwerks des Zapfwellengetriebes der Schmiermittelpegel im Getriebeabschnitt 22 gegenüber dem Zustand, wie er beispielsweise in den Figuren 1 und 3 gezeigt ist, abgesenkt und hierdurch die Verlustleistung des Zapfwellengetriebes vermindert wird.

Die erfindungsgemäße Getriebeanordnung 10 ist auch bei extremen Betriebsmodi eines Traktors wirksam, insbesondere bei extremer Schräglage sowie im Betrieb bei stark reduzierter Schmiermittelfüllung. Dies gilt auch dann, wenn externe Verbraucher - beispielsweise hydraulisch angetriebene Arbeitsgeräte - Schmiermittel 24 aus der Getriebeanordnung 10 entnahmen und hierdurch der Schmiermittelpegel insgesamt abgesenkt wird.

Aufgrund der Wirkungsweise der dynamischen Schmiermittelpegelregulierung kann ein minimaler Schmiermittelpegel in dem Getriebeabschnitt 20, der zur Aufrechterhaltung der Schmierung und zur Versorgung diverser Pumpen erforderlich ist, nicht unterschritten werden, da bei einem starken Abfall des Schmiermittelpegels naturgemäß die Schmiermittelförderung durch das Differenzialtellerrad 38 stark reduziert wird bzw. ganz aussetzt.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Getriebeanordnung für ein Fahrzeug, vorzugsweise für ein landwirtschaftliches oder industrielles Nutzfahrzeug, wobei die Getriebeanordnung (10) zumindest teilweise mit Schmiermittel (24) eines Schmiermittelsumpfs schmierbar ist und mindestens zwei Getriebeabschnitte (20, 22) aufweist, wobei jeder Getriebeabschnitt (20, 22) ein Getriebegehäuseteil (44, 46) aufweist, wobei die Getriebegehäuseteile (44, 46) der zwei Getriebeabschnitte (20, 22) aneinandergrenzen und einen Teil des Schmiermittelsumpfs bilden, wobei insbesondere im normalen Betriebsmodus üblicherweise entweder der eine oder der andere Getriebeabschnitt (20, 22) betreibbar ist, **dadurch gekennzeichnet, dass** zwischen den zwei Getriebeabschnitten (20, 24) ein Trennmittel (42) vorgesehen ist, mit welchem die zwei Getriebeabschnitte (20, 22) zumindest teilweise voneinander abtrennbar sind, wodurch Schmiermittel (24) in dem Getriebegehäuseteil (44, 46) zurückhaltbar ist, dessen Getriebeabschnitt (20, 22) in dem momentanen Betriebszustand nicht oder mit geringerer Drehzahl betrieben wird, wodurch der Getriebeabschnitt (20, 22) als Speicherreservoir für das Schmiermittel nutzbar ist, welcher in dem momentan vorliegenden Betriebszustand des Fahrzeugs nicht oder nur geringfügig betrieben wird, und dass sowohl Schmiermittel des einen Getriebeabschnitts (20, 22) von dem anderen Getriebeabschnitt (22, 20) zurückhaltbar ist als auch dass Schmiermittel des anderen Getriebeabschnitts (22, 20) von dem einen Getriebeabschnitt (20, 22) zurückhaltbar ist.

2. Getriebeanordnung nach Anspruch 1, **dadurch gekennzeichnet, dass** das Trennmittel (42) eine Trennwand aufweist, welche vorzugsweise sich nicht bis zur oberen inneren Wand eines Getriebegehäuseteils (44, 46) erstreckt.

3. Getriebeanordnung nach Anspruch 2, **dadurch gekennzeichnet, dass** die Trennwand sich vom Boden der Getriebeanordnung (10) bis mindestens auf eine Höhe einer in einem der Getriebegehäuseteile (44, 46) angeordneten Getriebeeingangswelle (62) oder Getriebeausgangswelle erstreckt.

4. Getriebeanordnung nach Anspruch 3, **dadurch gekennzeichnet, dass** die Trennwand ein Dichtmittel aufweist, mit welchem die Trennwand gegen die Getriebeeingangswelle (62) oder Getriebeausgangswelle abdichtbar ist, falls die Trennwand sich über die Höhe der Getriebeeingangswelle (62) oder Getriebeausgangswelle erstreckt.

5. Getriebeanordnung nach einem der Ansprüche 1 bis 4, **dadurch gekennzeichnet, dass** das Trennmittel (42) gegenüber einem Getriebegehäuseteil (44, 46) mit Hilfe von weiteren Dichtmitteln (54) abdichtbar ist, welche vorzugsweise Federstahlstreifen aufweisen.

6. Getriebeanordnung nach einem der Ansprüche 1 bis 5, **dadurch gekennzeichnet, dass** das Trennmittel (42) derart ausgebildet ist, dass mehr als die Hälfte des in den zwei Getriebeabschnitten (20 22) üblicherweise befindlichen Schmiermittels (24) in einem der Getriebegehäuseteile (44, 46) zurückhaltbar ist, vorzugsweise circa 1/3 bis 2/3 des Volumens des in den zwei Getriebeabschnitten (20, 22) üblicherweise befindlichen Schmiermittels (24).

7. Getriebeanordnung nach einem der Ansprüche 1 bis 6, **dadurch gekennzeichnet, dass** mindestens ein Führungsmittel (66) in einem Getriebegehäuseteil (20) vorgesehen ist, mit welchem das von einem in einem Getriebegehäuseteil (20) angeordneten rotierenden Getriebeteil (38) - beispielsweise einem Tellerrad - geschleuderten Schmiermittels (24) in den anderen Getriebegehäuseteil (22) leitbar ist.

8. Getriebeanordnung nach einem der Ansprüche 1 bis 7, **dadurch gekennzeichnet, dass** ein Rückführmittel (68) vorgesehen ist, mit welchem Schmiermittel (24) von einem Getriebegehäuseteil (20) in den anderen Getriebegehäuseteil (22) rückführbar ist.

9. Getriebeanordnung nach Anspruch 8, **dadurch gekennzeichnet, dass** das Rückführmittel (68) an dem Trennmittel (42) - insbesondere im bodennahen Bereich - angeordnet ist und vorzugsweise in Form einer Durchgangsöffnung ausgebildet ist.

10. Getriebeanordnung nach einem der Ansprüche 1 bis 9, **dadurch gekennzeichnet, dass** der eine Getriebeabschnitt (20) ein Differentialgetriebe und/oder dass der andere Getriebeabschnitt (22) ein Zapfwellengetriebe aufweist.

## Claims

1. Transmission arrangement for a vehicle, preferably for an agricultural or industrial utility vehicle, with it being possible for the transmission arrangement (10) to be at least partially lubricated with lubricant (24) from a lubricant sump and with the transmission arrangement (10) having at least two transmission sections (20, 22), with each transmission section (20, 22) having a transmission housing part (44, 46), with the transmission housing parts (44, 46) of the two transmission sections (20, 22) adjoining one another and forming a part of the lubricant sump, wherein in particular in the normal operating mode, normally either the one or the other transmission section (20, 22) can be operated, **characterized in that** a separating means (42) is provided between the two transmission sections (20, 24), by way of which separating means (42) the two transmission sections (20, 22) can be at least partially separated from one another, as a result of which lubricant (24) can be held back **in that** transmission housing part (44, 46) whose transmission section (20, 22) is not being operated or is being operated at low rotational speed in the present operating state, as a result of which that transmission section (20, 22) which is not being operated or which is being operated only to a small extent in the present operating state of the vehicle can be utilized as a storage reservoir for the lubricant, and **in that** both lubricant of the one transmission section (20, 22) can be held back from the other transmission section (22, 20) and also **in that** lubricant of the other transmission section (22, 20) can be held back from the one transmission section (20, 22).

2. Transmission arrangement according to Claim 1, **characterized in that** the separating means (42) has a partition which preferably does not extend up to the upper inner wall of a transmission housing part (44, 46).

3. Transmission arrangement according to Claim 2, **characterized in that** the partition extends from the base of the transmission arrangement (10) at least up to a height of a transmission input shaft (62) or transmission output shaft which is arranged in one of the transmission housing parts (44, 46).

4. Transmission arrangement according to Claim 3, **characterized in that** the partition has a sealing means, by way of which the partition can be sealed off against the transmission input shaft (62) or transmission output shaft if the partition extends above the height of the transmission input shaft (62) or transmission output shaft.

5. Transmission arrangement according to one of Claims 1 to 4, **characterized in that** the partition (42) can be sealed off with respect to one transmission housing part (44, 46) by way of further sealing means (54) which preferably have spring-steel strips.

6. Transmission arrangement according to one of Claims 1 to 5, **characterized in that** the partition (42) is formed such that more than half of the lubricant (24) which is usually situated in the two transmission sections (20, 22), preferably approximately 1/3 to 2/3 of the volume of the lubricant (24) which is conventionally situated in the two transmission sections (20, 22), can be held back in one of the transmission housing parts (44, 46).

7. Transmission arrangement according to one of Claims 1 to 6, **characterized in that** at least one guide means (66) is provided in a transmission housing part (20), by way of which guide means (66) the lubricant (24) which is centrifuged by a rotating transmission part (38) - for example a ring gear - can be conducted into the other transmission housing part (22).

8. Transmission arrangement according to one of Claims 1 to 7, **characterized in that** a return means (68) is provided, by means of which lubricant (24) can be returned from one transmission housing part (20) into the other transmission housing part (22).

9. Transmission arrangement according to Claim 8, **characterized in that** the return means (68) is arranged on the partition (42) - in particular in the region near the base - and is preferably formed in the manner of a passage opening.

10. Transmission arrangement according to one of Claims 1 to 9, **characterized in that** the one transmission section (20) has a differential gearing and/or **in that** the other transmission section (22) has a power take-off gear.

## Revendications

1. Boîte de vitesses pour véhicule, de préférence pour un véhicule utilitaire agricole ou industriel, dans lequel la boîte de vitesses (10) peut être lubrifiée au moins en partie par du lubrifiant (24) d'un carter de lubrifiant et présente au moins deux portions de boîte de vitesses (20, 22), chaque portion de boîte de vitesses (20, 22) présentant une partie de carter de boîte de vitesses (44, 46), les parties de carter de boîte de vitesses (44, 46) étant adjacentes aux deux portions de boîte de vitesses (20, 22) et formant une partie du carter de lubrifiant, et en particulier pendant le mode de fonctionnement normal, habituellement soit l'une soit l'autre portion de boîte de vitesses (20, 22) pouvant être entraînée, **caractérisée en ce qu'**entre les deux portions de boîte de vitesses (20, 22) un moyen de séparation (42) est prévu, avec lequel les deux portions de boîte de vitesses (20, 22) peuvent être séparées au moins partiellement l'une de l'autre, de sorte que du lubrifiant (24) puisse être retenu dans la partie de carter de boîte de vitesses (44, 46) dont la portion de boîte de vitesses (20, 22) n'est pas entraînée ou est entraînée à plus faible régime dans l'état de fonctionnement temporaire, de sorte que la portion de boîte de vitesses (20, 22) puisse être utilisée comme réservoir de stockage pour le lubrifiant qui n'est pas utilisé ou seulement très peu utilisé dans l'état de fonctionnement actuel temporaire du véhicule, et **en ce qu'**à la fois du lubrifiant d'une portion de boîte de vitesses (20, 22) puisse être retenu par l'autre portion de boîte de vitesses (22, 20) et que du lubrifiant de l'autre portion de boîte de vitesses (22, 20) puisse également être retenu par la première portion de boîte de vitesses (20, 22).

2. Boîte de vitesses selon la revendication 1, **caractérisée en ce que** le moyen de séparation (42) présente une paroi de séparation qui, de préférence, ne s'étend pas jusqu'à la paroi supérieure intérieure d'une partie de carter de boîte de vitesses (44, 46).

3. Boîte de vitesses selon la revendication 2, **caractérisée en ce que** la paroi de séparation s'étend depuis le fond de la boîte de vitesses (10) jusqu'à au moins une hauteur d'un arbre d'entrée de boîte de vitesses (62) ou d'un arbre de sortie de boîte de vitesses disposé dans l'une des parties de carter de boîte de vitesses (44, 46).

4. Boîte de vitesses selon la revendication 3, **caractérisée en ce que** la paroi de séparation présente un moyen d'étanchéité avec lequel la paroi de séparation peut être rendue étanche par rapport à l'arbre d'entrée de boîte de vitesses (62) ou l'arbre de sortie de boîte de vitesses, si la paroi de séparation s'étend au-delà de la hauteur de l'arbre d'entrée de boîte de vitesses (62) ou de l'arbre de sortie de boîte de vitesses.

5. Boîte de vitesses selon l'une quelconque des revendications 1 à 4, **caractérisée en ce que** le moyen de séparation (42) peut être rendu étanche par rapport à une partie de carter de boîte de vitesses (44, 46) à l'aide d'autres moyens d'étanchéité (54), qui présentent de préférence des rubans d'acier à ressort.

6. Boîte de vitesses selon l'une quelconque des revendications 1 à 5, **caractérisée en ce que** le moyen de séparation (42) est réalisé de telle sorte que plus de la moitié du lubrifiant (24) se trouvant habituellement dans les deux portions de boîte de vitesses (20, 22) peut être retenue dans l'une des parties de carter de boîte de vitesses (44, 46), de préférence environ 1/3 à 2/3 du volume du lubrifiant (24) se trouvant habituellement dans les deux portions de boîte de vitesses (20, 22).

7. Boîte de vitesses selon l'une quelconque des revendications 1 à 6, **caractérisée en ce qu'**au moins un moyen de guidage (66) est prévu dans une partie du carter de boîte de vitesses (20), avec lequel le lubrifiant (24) entraîné en rotation par une partie de boîte de vitesses (38) rotative disposée dans une partie du carter de boîte de vitesses (20) - par exemple une couronne - peut être guidé dans l'autre partie du carter de boîte de vitesses (22).

8. Boîte de vitesses selon l'une quelconque des revendications 1 à 7, **caractérisée en ce qu'**un moyen de reflux (68) est prévu, avec lequel du lubrifiant (24) peut être ramené par une partie du carter de boîte de vitesses (20) dans l'autre partie du carter de boîte de vitesses (22).

9. Boîte de vitesses selon la revendication 8, **caractérisée en ce que** le moyen de reflux (68) est disposé sur le moyen de séparation (42) notamment dans la région proche du fond - et est réalisé de préférence sous forme d'ouverture de passage.

10. Boîte de vitesses selon l'une quelconque des revendications 1 à 9, **caractérisée en ce que** l'une des portions de boîte de vitesses (20) présente un engrenage différentiel et/ou **en ce que** l'autre portion de boîte de vitesses (22) présente une boîte à prise de mouvement.
